# EUROPÄISCHE PATENTANMELDUNG

(11) **EP 2 645 214 A1**
(43) Veröffentlichungstag der Anmeldung: **02.10.2013**
(21) Anmeldenummer: 12161830.0
(22) Anmeldetag: 28.03.2012
(51) Int. Cl.: G06F 3/042

(54) **Touchscreen mit in-cell-Touch-Technik und Einkopplung von Infrarotlicht**

(71) Anmelder: Siemens Aktiengesellschaft, 80333 München (DE)
(72) Erfinder: Schwesig, Günter, 91054 Erlangen (DE); Walders, Hanno, 91056 Erlangen (DE)

(57) **Zusammenfassung**

Ein Touchscreen (3) weist eine Vielzahl in einer zweidimensionalen Matrix angeordneter Zellen (5) auf. In den Zellen (5) sind Leuchtelemente (7) und Lichtsensoren (8) angeordnet. Die Zellen (5) sind aus einer Berührrichtung des Touchscreens (3) gesehen mit einer Frontabdeckung (6) abgedeckt. Der Touchscreen (3) weist eine Ansteuereinrichtung (9) auf, mittels derer die Leuchtelemente (7) individuell angesteuert werden. Der Touchscreen (3) weist ferner eine Auswertungseinrichtung (10) auf, mittels derer von den Lichtsensoren (8) abgegebene, mit erfasster Lichtstrahlung korrespondierende Sensorsignale (S) ausgewertet werden. Die Auswertungseinrichtung (10) entscheidet anhand der Auswertung der Sensorsignale (S), ob und ggf. an welcher Stelle die Frontabdeckung (6) berührt wird. Die Lichtsensoren (8) sind für Infrarotlicht sensitiv. Der Touchscreen (3) weist eine Leuchteinrichtung (11) auf, von der Infrarotlicht abgegeben wird. Das von der Leuchteinrichtung (11) abgegebene Infrarotlicht wird aus der Berührrichtung des Touchscreens (3) gesehen seitlich oder von hinten in die Frontabdeckung (6) eingekoppelt.

## Beschreibung

Die vorliegende Erfindung betrifft einen Touchscreen,
- wobei der Touchscreen eine Vielzahl in einer zweidimensionalen Matrix angeordneter Zellen aufweist,
- wobei in den Zellen Leuchtelemente und Lichtsensoren angeordnet sind,
- wobei die Zellen aus einer Berührrichtung des Touchscreens gesehen mit einer Frontabdeckung abgedeckt sind,
- wobei der Touchscreen eine Ansteuereinrichtung aufweist,
- wobei die Leuchtelemente mittels der Ansteuereinrichtung individuell angesteuert werden,
- wobei der Touchscreen eine Auswertungseinrichtung aufweist,
- wobei von den Lichtsensoren abgegebene, mit erfasster Lichtstrahlung korrespondierende Sensorsignale mittels der Auswertungseinrichtung ausgewertet werden,
- wobei die Auswertungseinrichtung anhand der Auswertung der Sensorsignale entscheidet, ob und ggf. an welcher Stelle die Frontabdeckung berührt wird.

Derartige Touchscreens sind als Touchscreens mit sogenannter in-cell-Touch-Technik bekannt.

Bei der in-cell-Touch-Technik wird mittels der Lichtsensoren die Helligkeitsverteilung vor dem Display erfasst und ausgewertet. Es ist eine umfassende Auswertung und hiermit verbunden eine komfortable Bedienung möglich. Das Verfahren ist jedoch abhängig von der Umgebungshelligkeit. Bei hoher Helligkeit werden bereits Schatten der berührenden Finger bzw. der Hand erfasst. Bei geringer Helligkeit kann sich eine Reflexion des mittels der Leuchtelemente ausgegebenen Bildes an den berührenden Fingern bzw. der Hand ergeben. Die Auswertung ist daher entsprechend aufwändig und störanfällig. Die in-cell-Touch-Technik ist weiterhin schmutzempfindlich. Auch kann es durch Fremdlicht zu Fehlbedienungen kommen.

Im Stand der Technik ist weiterhin bekannt, die Frontscheibe eines Touchscreens mit Infrarotlicht zu beleuchten, wobei das Infrarotlicht entweder von unten oder seitlich in die Frontscheibe eingekoppelt wird. Bei der Berührung der Oberfläche wird Streulicht in das Display zurückgeworfen und dort mittels einer Kamera detektiert. Dieses Verfahren wird unter anderem als FTIR bezeichnet. Es erfordert aufgrund der Verwendung der Kamera eine hohe Bautiefe des Touchscreens.

Die Aufgabe der vorliegenden Erfindung besteht darin, einen Touchscreen der eingangs genannten Art derart weiterzuentwickeln, dass eine hohe Auswertungsqualität - insbesondere eine Vermeidung von Fehlbedienungen - bei gleichzeitig hohem Bedienkomfort möglich ist.

Die Aufgabe wird durch einen Touchscreen mit den Merkmalen des Anspruchs 1 gelöst. Vorteilhafte Ausgestaltungen des erfindungsgemäßen Touchscreens sind Gegenstand der abhängigen Ansprüche 2 und 3. Anspruch 4 nennt eine bevorzugte Verwendung des erfindungsgemäßen Touchscreens.

Erfindungsgemäß ist vorgesehen, einen Touchscreen der eingangs genannten Art dadurch auszugestalten,
- dass die Lichtsensoren für Infrarotlicht sensitiv sind,
- dass der Touchscreen eine Leuchteinrichtung aufweist, von der Infrarotlicht abgegeben wird und
- dass das von der Leuchteinrichtung abgegebene Infrarotlicht aus der Berührrichtung des Touchscreens gesehen seitlich oder von hinten in die Frontabdeckung eingekoppelt wird.

Gemäß einer bevorzugten Ausgestaltung der vorliegenden Erfindung ist vorgesehen,
- dass die Ansteuereinrichtung die Leuchteinrichtung derart ansteuert, dass das von der Leuchteinrichtung abgegebene Infrarotlicht mit einer Modulationsfrequenz moduliert wird, und
- dass die Auswertungseinrichtung die von den Lichtsensoren abgegebenen Sensorsignale mit der Modulationsfrequenz filtert und die Entscheidung, ob und ggf. an welcher Stelle die Frontabdeckung berührt wird, anhand der gefilterten Sensorsignale fällt.

Durch diese Vorgehensweise kann die Zuverlässigkeit bei der Auswertung, ob und ggf. an welcher Stelle die Frontabdeckung berührt wird, erhöht werden.

Die Frontabdeckung ist vorzugsweise als elastisch deformierbare Frontabdeckung ausgebildet. In diesem Fall ändert sich bei einem Deformieren der Frontabdeckung die Grenzfläche, an der das eingekoppelte Infrarotlicht reflektiert wird. Hiermit korrespondierend ändern sich somit auch die Lichtwege.

Prinzipiell ist der erfindungsgemäße Touchscreen beliebig verwendbar. Derzeit ist bevorzugt, dass er als Mensch-Maschine- Schnittstelle einer industriellen Steuerung verwendet wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Steueranordnung,
- FIG 2: perspektivisch einen Touchscreen,
- FIG 3 und 4: eine Schnittdarstellung eines Touchscreens und
- FIG 5: ein Ansteuer- und Auswertungsverfahren.

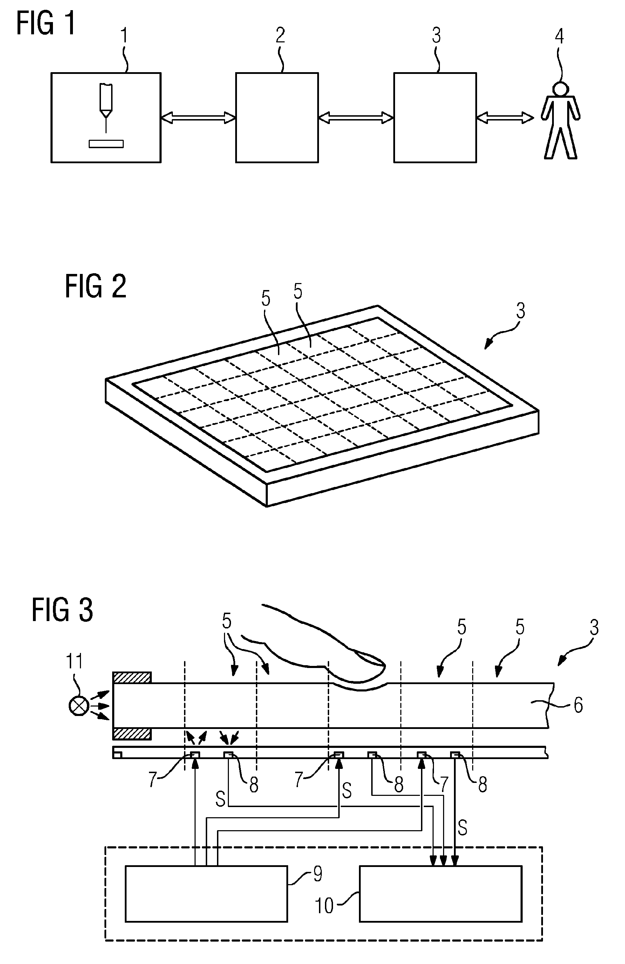

Gemäß FIG 1 wird eine industrielle technische Einrichtung 1 - rein beispielhaft ist in FIG 1 zu diesem Zweck eine Bohrmaschine dargestellt - mittels einer industriellen Steuerung 2 gesteuert. Die industrielle Steuerung ist in der Regel als numerische Steuerung (CNC), als speicherprogrammierbare Steuerung (SPS) oder als Industrie-PC ausgebildet. Die industrielle Steuerung 2 erhält über eine Mensch-Maschine-Schnittstelle 3 Vorgaben von einem Bediener 4. Weiterhin gibt sie Informationen an den Bediener 4 aus. Gemäß FIG 1 ist die Mensch-Maschine-Schnittstelle 3 als Touchscreen ausgebildet.

Gemäß FIG 2 weist der Touchscreen 3 eine Vielzahl von Zellen 5 auf. Die Zellen 5 sind gemäß FIG 2 in einer zweidimensionalen Matrix angeordnet. In der Regel weist der Touchscreen 3 pro Richtung über 100 Zellen 5 auf, beispielsweise 640 x 400 Zellen 5. Es sind jedoch ebenso andere Zahlen möglich.

Die Zellen 5 in ihrer Gesamtheit (also die zweidimensionale Matrix der Zellen 5) ist aus einer Berührrichtung des Touchscreens 3 gesehen mit einer Frontabdeckung 6 abgedeckt.

In den Zellen 5 sind gemäß FIG 3 Leuchtelemente 7 und Lichtsensoren 8 angeordnet. Mittels der Leuchtelemente 7 ist sichtbares Licht (Wellenlänge ca. 400 bis 700 mm) emittierbar. Die Leuchtelemente 7 sind mit einer Ansteuereinrichtung 9 des Touchscreens 3 verbunden. Die Leuchtelemente 7 werden mittels der Ansteuereinrichtung 9 individuell angesteuert, so dass die für den Bediener 4 bestimmten Informationen dargestellt werden.

Die Lichtsensoren 8 sind - evtl. zusätzlich zu einer Sensitivität für sichtbares Licht - für Infrarotlicht sensitiv. Sie geben entsprechend der von ihnen jeweils erfassten Lichtstrahlung Sensorsignale S ab. Die Sensorsignale S werden einer Auswertungseinrichtung 10 des Touchscreens 3 zugeführt. Die Auswertungseinrichtung 10 wertet die Sensorsignale S aus. Insbesondere entscheidet die Auswertungseinrichtung 10, ob und ggf. an welcher Stelle - ggf. auch mehreren Stellen gleichzeitig - die Frontabdeckung 6 berührt wird.

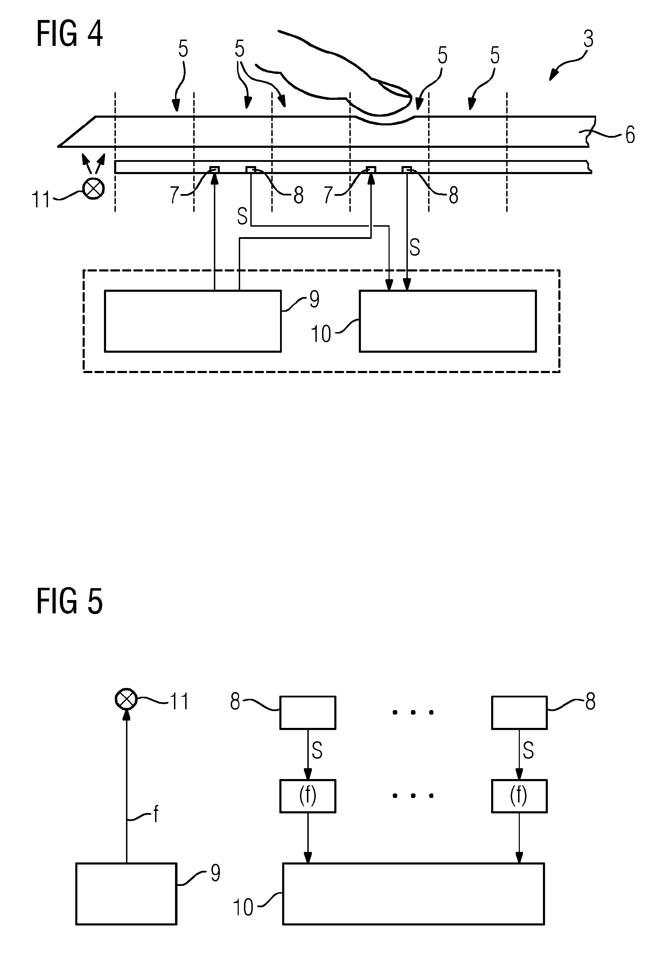

Um mittels der erfassten Sensorsignale S zuverlässig ermitteln zu können, ob und ggf. an welcher Stelle die Frontabdeckung 6 berührt wird, weist der Touchscreen 3 eine Leuchteinrichtung 11 auf. Von der Leuchteinrichtung 11 wird Infrarotlicht abgegeben. Dieses Infrarotlicht wird gemäß FIG 3 aus der Berührrichtung gesehen seitlich in die Frontabdeckung 6 eingekoppelt. Alternativ ist es gemäß FIG 4 möglich, das Infrarotlicht von hinten in die Frontabdeckung 6 einzukoppeln. Gemäß der in FIG 5 dargestellten bevorzugten Ausgestaltung steuert die Ansteuereinrichtung 9 die Leuchteinrichtung 11 derart an, dass das von der Leuchteinrichtung 11 abgegebene Infrarotlicht mit einer Modulationsfrequenz f moduliert wird. Hiermit korrespondierend filtert die Auswertungseinrichtung 10 die Sensorsignale S mit der Modulationsfrequenz f. Die Entscheidung, ob und ggf. an welcher Stelle die Frontabdeckung 6 berührt wird, wird in diesem Fall anhand der gefilterten Sensorsignale gefällt.

Die Modulationsfrequenz f kann nach Bedarf bestimmt sein. Es ist möglich, dass sie wenige Hertz beträgt. Ebenso kann sie im zweistelligen und sogar im dreistelligen Megahertzbereich liegen. Ebenso kann sie irgendwo dazwischen liegen.

Die Frontabdeckung 6 ist gemäß den FIG 3 und 4 vorzugsweise als elastisch deformierbare Frontabdeckung 6 ausgebildet. Durch diese Ausgestaltung wird die Auswertungszuverlässigkeit noch weiter erhöht.

Entsprechend der Darstellung in den FIG 3 und 4 sind die Ansteuereinrichtung 9 und die Auswertungseinrichtung 10 voneinander getrennte Einrichtungen. Es ist jedoch alternativ möglich, stattdessen eine gemeinsame Einrichtung zu verwenden.

Die vorliegende Erfindung weist viele Vorteile auf. Insbesondere wird durch die erfindungsgemäße Vorgehensweise der Touchscreen 3 unabhängig von Fremdlicht. Dennoch bleiben die geringe Einbautiefe und die Kosten im Wesentlichen gleich. Man erhält also auf einfache Weise ein kompaktes und robustes Touchscreendisplay, das nicht nur multitouchfähig ist, sondern auch gleichermaßen für Industrie- und für Konsumeranwendungen geeignet ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

## Patentansprüche

1. Touchscreen,
- wobei der Touchscreen eine Vielzahl in einer zweidimensionalen Matrix angeordneter Zellen (5) aufweist,
- wobei in den Zellen (5) Leuchtelemente (7) und Lichtsensoren (8) angeordnet sind,
- wobei die Zellen (5) aus einer Berührrichtung des Touchscreens gesehen mit einer Frontabdeckung (6) abgedeckt sind,
- wobei der Touchscreen eine Ansteuereinrichtung (9) aufweist,
- wobei die Leuchtelemente (7) mittels der Ansteuereinrichtung (9) individuell angesteuert werden,
- wobei der Touchscreen eine Auswertungseinrichtung (10) aufweist,
- wobei von den Lichtsensoren (8) abgegebene, mit erfasster Lichtstrahlung korrespondierende Sensorsignale (S) mittels der Auswertungseinrichtung (10) ausgewertet werden,
- wobei die Auswertungseinrichtung (10) anhand der Auswertung der Sensorsignale (S) entscheidet, ob und ggf. an welcher Stelle die Frontabdeckung (6) berührt wird,
- wobei die Lichtsensoren (8) für Infrarotlicht sensitiv sind,
- wobei der Touchscreen eine Leuchteinrichtung (11) aufweist, von der Infrarotlicht abgegeben wird,
- wobei das von der Leuchteinrichtung (11) abgegebene Infrarotlicht aus der Berührrichtung des Touchscreens gesehen seitlich oder von hinten in die Frontabdeckung (6) eingekoppelt wird.

2. Touchscreen nach Anspruch 1,
**dadurch gekennzeichnet, dass**
- die Ansteuereinrichtung (9) die Leuchteinrichtung (11) derart ansteuert, dass das von der Leuchteinrichtung (11) abgegebene Infrarotlicht mit einer Modulationsfrequenz (f) moduliert wird, und
- dass die Auswertungseinrichtung (10) die von den Lichtsensoren (8) abgegebenen Sensorsignale (S) mit der Modulationsfrequenz (f) filtert und die Entscheidung, ob und ggf. an welcher Stelle die Frontabdeckung (6) berührt wird, anhand der gefilterten Sensorsignale fällt.

3. Touchscreen nach Anspruch 1 oder 2,
**dadurch gekennzeichnet, dass** die Frontabdeckung (6) als elastisch deformierbare Frontabdeckung (6) ausgebildet ist.

4. Touchscreen nach Anspruch 1, 2 oder 3,
**dadurch gekennzeichnet, dass** er als Mensch-Maschine-Schnittstelle einer industriellen Steuerung (2) verwendet wird.
